# EUROPEAN PATENT SPECIFICATION

(11) **EP 4 484 778 B1**
(45) Date of publication and mention of the grant of the patent: **06.05.2026**
(21) Application number: 23774688.8
(22) Date of filing: 15.03.2023
(51) Int. Cl.: F16C 19/06, F16C 33/41, F16C 41/00, G08C 17/00

(54) **BEARING DEVICE**
LAGERVORRICHTUNG
DISPOSITIF À PALIER

(30) Priority: 24.03.2022 JP 2022047704; 24.03.2022 JP 2022047705; 30.03.2022 JP 2022055788
(43) Date of publication of application: 01.01.2025
(73) Proprietor: NTN Corporation, Osaka-shi Osaka 530-0005 (JP)
(72) Inventor: KOIKE, Takashi, Iwata-shi, Shizuoka 438-8510 (JP); FUKUSHIMA, Yasuyuki, Iwata-shi, Shizuoka 438-8510 (JP); MATSUBAYASHI, Kohei, Iwata-shi, Shizuoka 438-8510 (JP); MAKINO, Tomoaki, Iwata-shi, Shizuoka 438-8510 (JP)
(74) Representative: Bockhorni & Brüntjen Partnerschaft Patentanwälte mbB
(86) International application number: PCT/JP2023/010030
(87) International publication number: WO 2023/182091

(56) References cited:
- WO-A1-2021/161843
- WO-A1-2021/177354
- JP-A- 2003 287 046
- US-A1- 2012 169 166
- US-B2- 11 242 894

## Description

### TECHNICAL FIELD

The present disclosure relates to a bearing device.

### BACKGROUND ART

There is known a bearing device formed of a combination of a bearing and a generator and used as a power supply for a sensor, wireless communication, and the like.

JP 2017 072170 A (Japanese Patent Laying-Open No. 2017-72170) (PTL 1) discloses a bearing device equipped with a wireless sensor and configured to wirelessly transmit information from a sensor. The bearing device disclosed in PTL 1 has a structure in which a multipole ring magnet is fixed to one end of a cage holding a rolling element, and a coil is disposed on a seal side facing the multipole ring magnet. In the bearing device disclosed in PTL 1, electric power is generated by relative rotation of the multipole ring magnet and the coil that are disposed in the axial direction.
US 2012 / 169166 A1 (PTL 2) discloses a bearing which has a first bearing ring, a second bearing ring and a claw pole generator-type power generation unit. The bearing has a substantially space-neutral power generation unit, which has a high filling factor for the induction coil. Every claw ring is connected to a section of the body of the first bearing ring in a magnetically conducting fashion and the magnetic circuit is substantially closed via the section of the body of the first bearing ring.

### CITATION LIST

### PATENT LITERATURE

PTL 1: JP 2017 072170 A (Japanese Patent Laying-Open No. 2017-72170)
PTL 2: US 2012 / 169166 A1

### SUMMARY OF INVENTION

### TECHNICAL PROBLEM

In this case, due to its use, the cage significantly rattles in the axial direction of the bearing. For this reason, in the bearing device in PTL 1, the gap between the multipole ring magnet and the coil in the axial direction tends to vary due to such rattling of the cage caused by its use. In the bearing device in PTL 1, it is conceivable that, when the gap becomes larger, the amount of power generation decreases, which exerts an influence upon the driving of electronic components such as a sensor. In the bearing device in PTL 1, it is conceivable that, when the gap becomes smaller, the multipole ring magnet comes into contact with electronic components such as a sensor.

The present disclosure has been made to solve the above-described problems, an object thereof is to provide a bearing device that is reduced in dimensions and still capable of functioning normally.

### SOLUTION TO PROBLEM

The above-described problems are solved by a bearing device according to independent claim 1. Further developments are subject matter of the dependent claims. A bearing device of the present disclosure includes: a standard bearing as a bearing that includes an outer ring, an inner ring, and a rolling element, the bearing having main dimensions defined under specific standards. The bearing device includes: a magnetic ring fixed to one of the outer ring or the inner ring; a stator disposed to face the magnetic ring in a radial direction of the standard bearing and fixed to the other of the outer ring or the inner ring; and a circuit board. The magnetic ring and the stator constitute a generator that generates alternating-current (AC) power. The circuit board includes: at least one sensor that detects a state of the standard bearing; a wireless communication circuit that wirelessly transmits an output from the at least one sensor to outside; and a power supply circuit that converts AC power generated by the generator into direct-current (DC) power usable in the at least one sensor and the wireless communication circuit. The magnetic ring, the stator, and the circuit board are disposed inside an annular space formed by a recess in an end portion of the outer ring and a recess in an end portion of the inner ring.

### ADVANTAGEOUS EFFECTS OF INVENTION

According to the bearing device of the present disclosure, the magnetic ring, the stator, and the circuit board are disposed inside the annular space so as not to overlap with each other in the axial direction of the bearing. Thereby, each component can be disposed inside the annular space, so that the bearing can be reduced in dimensions. Further, in the bearing device of the present disclosure, for example, the magnetic ring is fixed to the inner ring, and the stator is fixed to the outer ring at the position facing the magnetic ring. The displacement of the inner ring and the outer ring in the axial direction of the bearing is relatively small, and the magnetic ring and the stator constitute the generator, with the result that the bearing device is reduced in dimensions and still capable of functioning normally.

### BRIEF DESCRIPTION OF DRAWINGS

Fig. 1 is a perspective view showing an entirety of a bearing device according to a first embodiment.
Fig. 2 is a cross-sectional view along a plane including a rotation axis of a bearing.
Fig. 3 is a diagram for illustrating a cage.
Fig. 4 is a diagram of the bearing device viewed from the side of a sensor unit.
Fig. 5 is an exploded perspective view of the sensor unit.
Fig. 6 is a perspective view of the sensor unit after assembly.
Fig. 7 is a cross-sectional view showing only a sensor unit and a magnetic ring in a second embodiment.
Fig. 8 is an exploded perspective view of the sensor unit according to the second embodiment.
Fig. 9 is a perspective view of the sensor unit according to the second embodiment after assembly.
Fig. 10 is a cross-sectional view showing only a sensor unit and a magnetic ring in a third embodiment.
Fig. 11 is an exploded perspective view of the sensor unit according to the third embodiment.
Fig. 12 is a perspective view of the sensor unit according to the third embodiment after assembly.
Fig. 13 is a cross-sectional view showing only a sensor unit and a magnetic ring in a fourth embodiment.
Fig. 14 is an exploded perspective view of the sensor unit according to the fourth embodiment.
Fig. 15 is a perspective view of the sensor unit according to the fourth embodiment after assembly.
Fig. 16 is a cross-sectional view of a bearing device according to a fifth embodiment.
Fig. 17 is a perspective view of an entirety of a bearing device according to a sixth embodiment.
Fig. 18 is a cross-sectional view along a plane including a rotation axis of a bearing.
Fig. 19 is a diagram for illustrating a cage.
Fig. 20 is a diagram of the bearing device viewed from the side of a sensor unit.
Fig. 21 is an exploded perspective view of a sensor unit according to the sixth embodiment.
Fig. 22 is a perspective view of the sensor unit according to the sixth embodiment after assembly.
Fig. 23 is a perspective view of a sensor unit according to a seventh embodiment.
Fig. 24 is a perspective view of a sensor unit according to an eighth embodiment.

### DESCRIPTION OF EMBODIMENTS

Hereinafter, embodiments of the present disclosure will be described in detail with reference to the accompanying drawings. In the embodiments described below, when the number, the quantity and the like are mentioned, the scope of the present disclosure is not necessarily limited thereto unless otherwise specified. The same or corresponding components are denoted by the same reference characters, and the description thereof may not be repeated. It has been originally intended to use an appropriate combination of configurations in the embodiments.

### [First Embodiment]

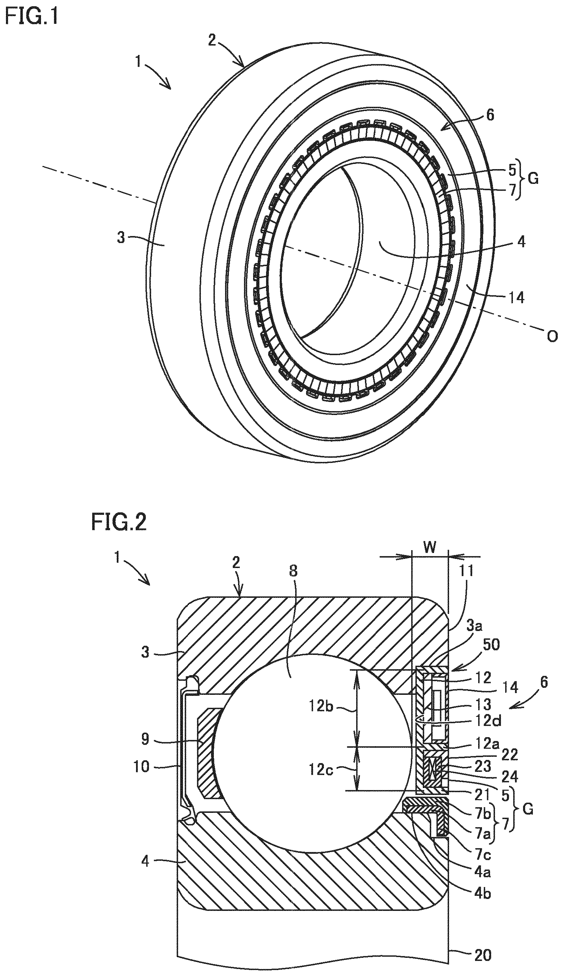

Fig. 1 is a perspective view showing the entirety of a bearing device 1 according to the first embodiment. Bearing device 1 includes a bearing 2, a sensor unit 6, and a magnetic ring 7. Bearing 2 includes an outer ring 3 and an inner ring 4. In bearing 2, for example, outer ring 3 serves as a stationary ring and inner ring 4 serves as a rotation ring. Although a deep groove ball bearing will be described as an example of bearing 2, the type of bearing 2 is not limited to such a deep groove ball bearing.

In this case, bearing 2 is a standard bearing as a bearing whose main dimensions (an inside diameter, an outside diameter, a width, and the like) are defined in specific standards. The standard bearing is a bearing having dimensions defined, for example, in ISO standards or JIS standards. Bearing 2 is a radial bearing and has main dimensions defined in ISO 15 or JIS B 1512-1. In the following, bearing 2 is also referred to as a standard bearing 2.

Sensor unit 6 includes a stator 5 and a lid 14. The structure of stator 5 will be described later in detail. Lid 14 is a non-metal resin member and protects the inside of sensor unit 6. Magnetic ring 7 is a magnetic member in which N poles and S poles are alternately magnetized in the circumferential direction. Stator 5 is fixed to outer ring 3, and magnetic ring 7 is fixed to inner ring 4. Stator 5 and magnetic ring 7 constitute a generator G. Generator G is a claw pole-type generator but may be a generator having another structure. Fig. 1 shows a one-dot chain line indicating a rotation axis O of bearing 2.

Fig. 2 is a cross-sectional view along a plane including rotation axis O of bearing 2. Bearing 2 includes outer ring 3, inner ring 4, a rolling element 8, a cage 9, and a seal 10. Bearing 2 should only be selected from those having a size of the model number of the standard bearing having a distance W between an end face 11 of bearing 2 and rolling element 8 such that sensor unit 6 and magnetic ring 7 can be accommodated within distance W. End face 11 is also an end face of outer ring 3.

An inner circumferential surface at one end of outer ring 3 has a first cutout portion 3a provided as a stepped portion and formed as a recess in an end portion of outer ring 3. An outer circumferential surface at one end of inner ring 4 has a second cutout portion 4a provided as a stepped portion and formed as a recess in an end portion of inner ring 4 so as to face first cutout portion 3a. In the axial direction (also referred to as axially) of bearing 2, an annular space by an annular recess 50 that is cut out toward rolling element 8 is formed by first cutout portion 3a and second cutout portion 4a so as to extend from outer ring 3 to inner ring 4.

Sensor unit 6 includes a cage member 12, a circuit board 13, stator 5, and lid 14. Cage member 12 is a magnetic material having a partition wall 12a that partitions cage member 12 into a first region 12b and a second region 12c in a radial direction (also referred to as radially) of bearing 2. Circuit board 13 is fixed to an inner bottom surface 12d of first region 12b, and stator 5 is disposed in second region 12c. Lid 14 protects circuit board 13 fixed to inner bottom surface 12d. Instead of lid 14, a resin sealing material may be used to seal circuit board 13.

The outside surface of cage member 12 on the first region 12b side is fitted in and fixed to first cutout portion 3a formed in outer ring 3. Cage member 12 is press-fitted or bonded so as not to protrude from end face 11 of outer ring 3. Cage member 12 may be fixed by both press-fitting and bonding, or may be fixed by other methods. When cage member 12 is fixed to first cutout portion 3a, a certain gap is ensured between rolling element 8 and cage member 12. Thereby, even when displacement in the axial direction occurs between rolling element 8 and cage member 12, the gap can prevent contact between rolling element 8 and cage member 12.

Stator 5 includes two magnetic members 21 and 22, a bobbin 23, and a coil 24. A portion of cage member 12 that includes second region 12c is used as magnetic member 21 of stator 5.

Magnetic ring 7 includes a core metal 7a and a multipole magnet 7b. Multipole magnet 7b is formed, for example, by kneading magnetic powder with rubber to obtain a magnetic material, which is then vulcanized and bonded to core metal 7a, to which N poles and S poles are alternately magnetized in the circumferential direction of bearing 2. Core metal 7a of magnetic ring 7 has a flange portion 7c in order to increase rigidity. Magnetic ring 7 is fixed to an outside surface 4b of inner ring 4 by press-fitting or the like. Flange portion 7c is accommodated in second cutout portion 4a provided in inner ring 4. Magnetic ring 7 is disposed so as not to protrude from end face 20 of inner ring 4.

Inside annular recess 50, magnetic ring 7, stator 5, and circuit board 13 are disposed so as not to overlap with each other in the axial direction of bearing 2. Thereby, each component can be disposed inside this annular recess 50, so that bearing 2 can be reduced in dimensions. Further, in bearing device 1, for example, magnetic ring 7 is fixed to inner ring 4, and stator 5 is fixed to outer ring 3 at a position facing magnetic ring 7. The displacement of inner ring 4 and outer ring 3 in the axial direction of bearing 2 is relatively small as compared with cage 9, and thus, the stable amount of power generation can be ensured by generator G, and the bearing device is reduced in dimensions and still capable of functioning normally.

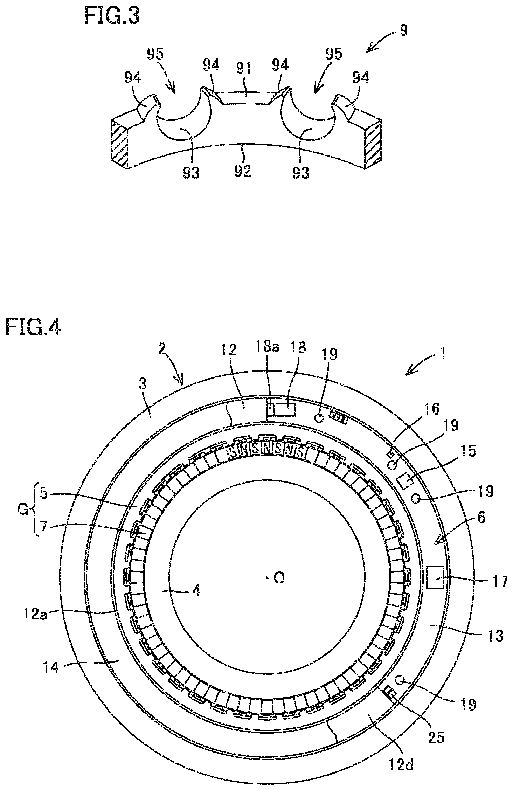

Fig. 3 is a diagram for illustrating cage 9. Cage 9 is provided with recesses 93 formed at a prescribed pitch in the circumferential direction of an end face 91 in the axial direction of the annular cage body. A pair of claw portions 94 and 94 are formed to protrude from opening ends of recess 93 that face each other in the circumferential direction of recess 93. Recess 93 and the pair of claw portions 94 and 94 form a pocket 95 in which rolling element 8 shown in Fig. 2 is accommodated. In this way, cage 9 is shaped to be open on the end face 91 side as one side and to be connected on the side of an end face 92 as the other side. Cage 9, which is a resin-made member, is disposed on the open side such that sensor unit 6 and magnetic ring 7 do not protrude from end faces 11 and 20.

Fig. 4 is a diagram of bearing device 1 viewed from the sensor unit 6 side. Fig. 4 does not show a part of lid 14 such that the inside of sensor unit 6 can be seen. One or more sensors for monitoring the state of bearing 2 are mounted on circuit board 13. For example, an acceleration sensor 15 and a temperature sensor 16 are mounted on circuit board 13. Note that temperature sensor 16 may be inserted through a hole (not shown) provided in inner bottom surface 12d of cage member 12 and then mounted on the rear surface of circuit board 13 so as to be located close to (or to be in contact with) the end face of first cutout portion 3a of outer ring 3. Thereby, temperature sensor 16 is located close to outer ring 3 and thereby can accurately measure the temperature of bearing 2.

On circuit board 13, a power supply circuit 17 and a wireless communication circuit 18 are further mounted. Power supply circuit 17 rectifies AC power generated by generator G and converts the rectified AC power into DC power. The DC power converted by power supply circuit 17 is used in acceleration sensor 15, temperature sensor 16, and wireless communication circuit 18. A terminal 25 is disposed on circuit board 13.

Wireless communication circuit 18 includes an antenna portion 18a. Wireless communication circuit 18 wirelessly transmits the outputs from acceleration sensor 15 and temperature sensor 16, which monitor the state of bearing 2, to the outside through antenna portion 18a. Circuit board 13 is fixed to cage member 12 with a plurality of screws 19. Circuit board 13 may be bonded and fixed to cage member 12. Circuit board 13 on which wireless communication circuit 18 is mounted is disposed to face lid 14 made of resin. Thereby, wireless communication circuit 18 has a structure not hermetically sealed with a conductive material such as metal. This allows wireless communication through antenna portion 18a in wireless communication circuit 18.

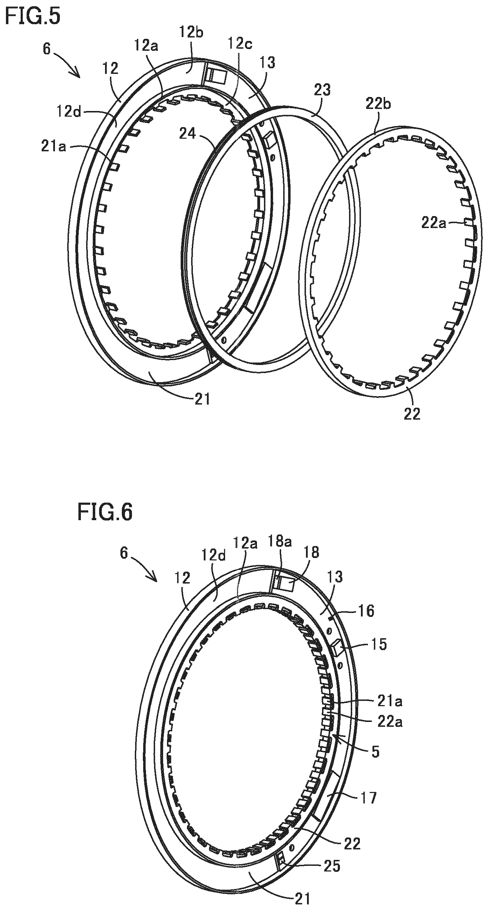

Fig. 5 is an exploded perspective view of sensor unit 6. Fig. 6 is a perspective view of sensor unit 6 after assembly. Sensor unit 6 includes cage member 12, circuit board 13, and stator 5. Circuit board 13 is fixed to inner bottom surface 12d of first region 12b of cage member 12. Stator 5 is disposed in second region 12c of cage member 12. Stator 5 includes two magnetic members 21 and 22, bobbin 23, and coil 24. A part of cage member 12 that includes partition wall 12a of second region 12c is used as magnetic member 21 of stator 5.

Each of magnetic members 21 and 22 has a U-shaped cross section. A plurality of claw portions 21a are formed on an inner circumferential portion of magnetic member 21. A plurality of claw portions 22a are formed on an inner circumferential portion of magnetic member 22. Coil 24 around which a magnet wire is wound a plurality of times is disposed in a groove provided in bobbin 23 in its circumferential direction. Bobbin 23 may not be provided.

The following describes an assembly method for stator 5. First, in the state in which bobbin 23 wound with coil 24 is inserted into magnetic member 22, the plurality of claw portions 21a of magnetic member 21 and the plurality of claw portions 22a of magnetic member 22 are assembled to be alternately arranged with a gap interposed therebetween in the circumferential direction. Then, an outer circumferential surface 22b of magnetic member 22 is fixed to be fitted in the inner circumferential surface of partition wall 12a of magnetic member 21.

The plurality of claw portions 21a of magnetic member 21 and the plurality of claw portions 22a of magnetic member 22 are disposed to respectively face each other while ensuring a gap between each of claw portions 21a, 22a and multipole magnet 7b of magnetic ring 7 shown in Fig. 2. Claw pole-type generator G is formed by magnetic ring 7, and the plurality of claw portions 21a of magnetic member 21 and the plurality of claw portions 22a of magnetic member 22 in stator 5. The total number of the plurality of claw portions 21a and 22a is equal to the number of poles (the total number of the N and S poles) in multipole magnet 7b.

The magnetic flux emitted from the N pole of multipole magnet 7b flows, for example, from the plurality of claw portions 21a (or the plurality of claw portions 22a) each serving as a magnetic pole into magnetic member 21 (or magnetic member 22), flows around coil 24, and passes through the plurality of claw portions 22a (or the plurality of claw portions 21a) adjacent thereto, and then flows back to the S pole of multipole magnet 7b. When the positions of the N pole and the S pole of multipole magnet 7b are replaced with each other by the rotation of inner ring 4, the direction of the magnetic flux is reversed. The alternating magnetic field generated in this way generates AC power at both ends of coil 24.

Each of the ends (not shown) of the winding start and the winding end of coil 24 pulled out of stator 5 is connected to terminal 25 provided on circuit board 13. The AC power output from generator G by the rotation of inner ring 4 is converted into DC power by power supply circuit 17.

Sensor unit 6 of bearing device 1 is divided by partition wall 12a into first region 12b and second region 12c in the radial direction of cage member 12. Circuit board 13 is disposed in first region 12b, and stator 5 in claw pole-type generator G is disposed in second region 12c. Magnetic ring 7 is disposed on the side of the inside diameter to face stator 5.

As described above, bearing device 1 is structured such that circuit board 13, stator 5, and magnetic ring 7 are sequentially disposed so as not to overlap with each other in the axial direction of bearing 2. Further, bearing device 1 is shaped such that sensor unit 6 does not protrude from end face 11 of bearing 2, and also shaped such that magnetic ring 7 does not protrude from end face 20 of inner ring 4. Thereby, in bearing device 1, sensor unit 6 can be formed to be thin in the axial direction.

In bearing device 1, stator 5 and magnetic ring 7 are disposed in the radial direction to constitute claw pole-type generator G. Thus, stator 5 and magnetic ring 7 are fixed to a component with less rattling caused by the use of bearing device 1, and thereby, the stable amount of power generation can be ensured by generator G.

In this case, cage member 12 is divided by partition wall 12a into two regions including first region 12b and second region 12c. The portion of cage member 12 that includes first region 12b is used for holding circuit board 13, and the portion of cage member 12 that includes second region 12c is used also as magnetic member 21. Thus, in bearing device 1, the number of components can be reduced, and stator 5 can be firmly fixed to cage member 12.

### [Second Embodiment]

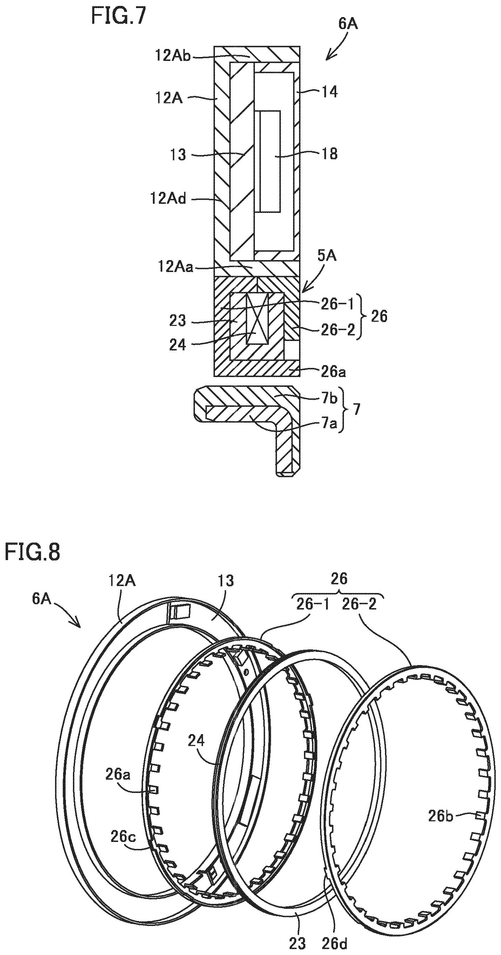

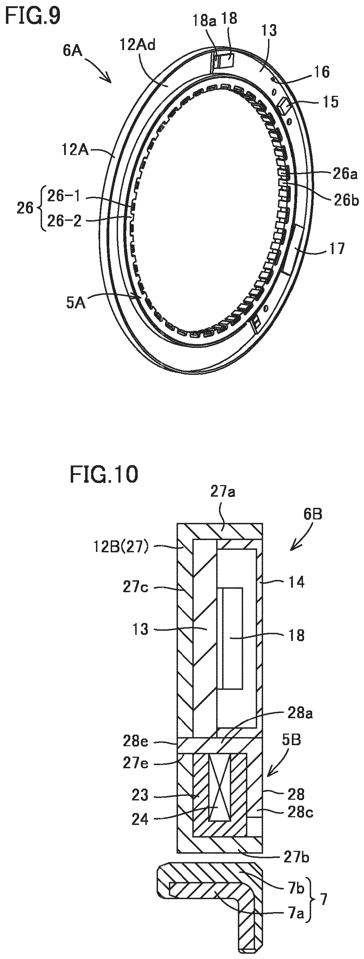

In the second embodiment, a sensor unit 6A different in structure from sensor unit 6 in the first embodiment will be described. Fig. 7 is a cross-sectional view showing only sensor unit 6A and magnetic ring 7 in the second embodiment. Fig. 8 is an exploded perspective view of sensor unit 6A according to the second embodiment. Fig. 9 is a perspective view of sensor unit 6A according to the second embodiment after assembly. In the following, the description of the same configurations as those of sensor unit 6 in the first embodiment will not be repeated.

Sensor unit 6A includes a cage member 12A, circuit board 13, a stator 5A, and lid 14. Cage member 12A does not have partition wall 12a in the first embodiment. Cage member 12A has an annular shape and has a U-shaped cross section including an outer circumferential portion 12Ab, an inner circumferential portion 12Aa, and a bottom portion 12Ad connecting outer circumferential portion 12Ab and inner circumferential portion 12Aa. Stator 5A is fixed to the side surface of inner circumferential portion 12Aa by press-fitting. Stator 5A may be fixed by bonding, or may be fixed by both press-fitting and bonding. Circuit board 13 is fixed to bottom portion 12Ad of cage member 12A.

Stator 5A includes a magnetic member 26, bobbin 23, and coil 24. Magnetic member 26 includes a magnetic member 26-1 and a magnetic member 26-2. Each of magnetic members 26-1 and 26-2 has a U-shaped cross section. Magnetic member 26-1 has an inner circumferential portion provided with a plurality of claw portions 26a. Magnetic member 26-2 has an inner circumferential portion provided with a plurality of claw portions 26b. The plurality of claw portions 26a and the plurality of claw portions 26b are alternately arranged with a gap interposed therebetween in the circumferential direction.

Magnetic members 26-1 and 26-2 have outer circumferential portions provided with a plurality of recesses 26c and a plurality of protrusions 26d, respectively. By engagement between recesses 26c and protrusions 26d, the plurality of claw portions 26a and the plurality of claw portions 26b are easily positionally aligned.

Cage member 12A and magnetic members 26-1 and 26-2 each have a U-shaped cross section and have a simple shape, and thus, can be easily pressed, so that the manufacturing cost can be reduced.

### [Third Embodiment]

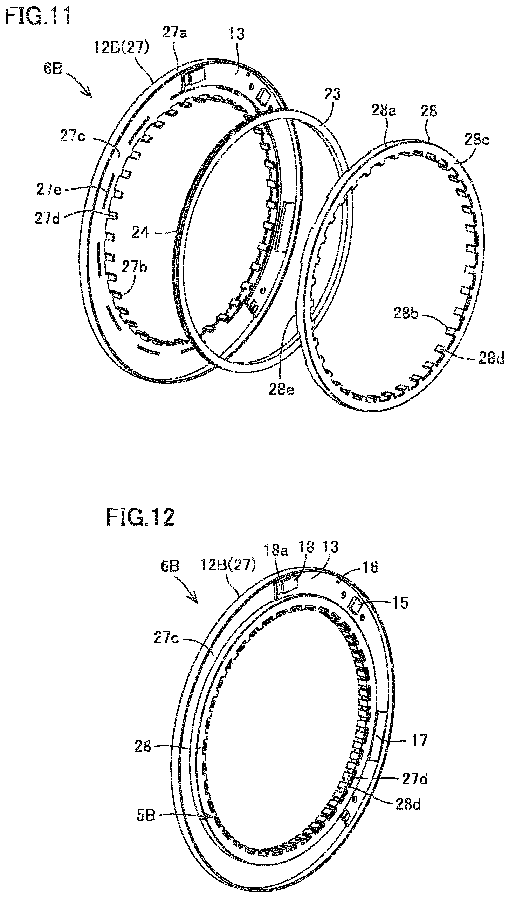

In the third embodiment, a sensor unit 6B different in structure from sensor unit 6 in the first embodiment will be described. Fig. 10 is a cross-sectional view showing only sensor unit 6B and magnetic ring 7 in the third embodiment. Fig. 11 is an exploded perspective view of sensor unit 6B according to the third embodiment. Fig. 12 is a perspective view of sensor unit 6B according to the third embodiment after assembly. In the following, the description of the same configurations as those of sensor unit 6 in the first embodiment will not be repeated.

Sensor unit 6B includes a cage member 12B, circuit board 13, a stator 5B, and lid 14. Cage member 12B of sensor unit 6B has a function of fixing circuit board 13 and a function as a magnetic member 27 of stator 5B. Cage member 12B (magnetic member 27) has an annular shape and has a U-shaped cross section including an outer circumferential portion 27a, an inner circumferential portion 27b, and a bottom portion 27c connecting outer circumferential portion 27a and inner circumferential portion 27b. Inner circumferential portion 27b is formed by a plurality of claw portions 27d. Bottom portion 27c is provided with a plurality of recesses 27e that are spaced apart from each other in the circumferential direction of bearing 2.

Stator 5B includes a magnetic member 28. Magnetic member 28 has an annular shape and has a U-shaped cross section including an outer circumferential portion 28a, an inner circumferential portion 28b, and a bottom portion 28c connecting outer circumferential portion 28a and inner circumferential portion 28b. Inner circumferential portion 28b is formed by a plurality of claw portions 28d each facing a corresponding one of the plurality of claw portions 27d of magnetic member 27. A plurality of protrusions 28e spaced apart from each other in the circumferential direction of bearing 2 are formed at an end portion in outer circumferential portion 28a in the axial direction of bearing 2.

The following describes an assembly method for stator 5B. In the state in which bobbin 23 wound with coil 24 is inserted into magnetic member 28, protrusions 28e of magnetic member 28 are respectively engaged with recesses 27e of magnetic member 27. By the engagement between the plurality of recesses 27e and the plurality of protrusions 28e, the plurality of claw portions 27d of magnetic member 27 and the plurality of claw portions 28d of magnetic member 28 are alternately arranged with a gap interposed therebetween in the circumferential direction. The plurality of recesses 27e and the plurality of protrusions 28e allow easy positional alignment between the plurality of claw portions 27d and the plurality of claw portions 28d. The end face of magnetic member 28 excluding protrusions 28e abuts on bottom portion 27c of magnetic member 27.

Each of recesses 27e of magnetic member 27 and each of protrusions 28e of magnetic member 28 are fixed by press-fitting. However, each recess 27e and each protrusion 28e may be fixed by bonding or by laser welding. Alternatively, each recess 27e and each protrusion 28e may be fixed in combination of press-fitting, bonding, and welding. By engagement between each recess 27e and each protrusion 28e, a jig does not have to be used to allow coaxial alignment between two magnetic members 27 and 28, and also allow easy positional alignment between the plurality of claw portions 27d and 28d. Three or more recesses 27e and three or more protrusions 28e are preferably formed.

Cage member 12B functions also as magnetic member 27, and thus, the number of components can be reduced. Magnetic members 27 and 28 each have a U-shaped cross section and have a simple shape, and thus, can be easily pressed, so that the manufacturing cost can be reduced.

Note that recesses 27e and protrusions 28e may not be provided. In this case, in the state in which a jig (not shown) is used to achieve the coaxial alignment between magnetic members 27 and 28, and to achieve the positional alignment between the plurality of claw portions 27d and 28d, the surfaces of contact between bottom portion 27c of magnetic member 27 and the end portion of outer circumferential portion 28a of magnetic member 28 may be fixed by laser welding or the like.

### [Fourth Embodiment]

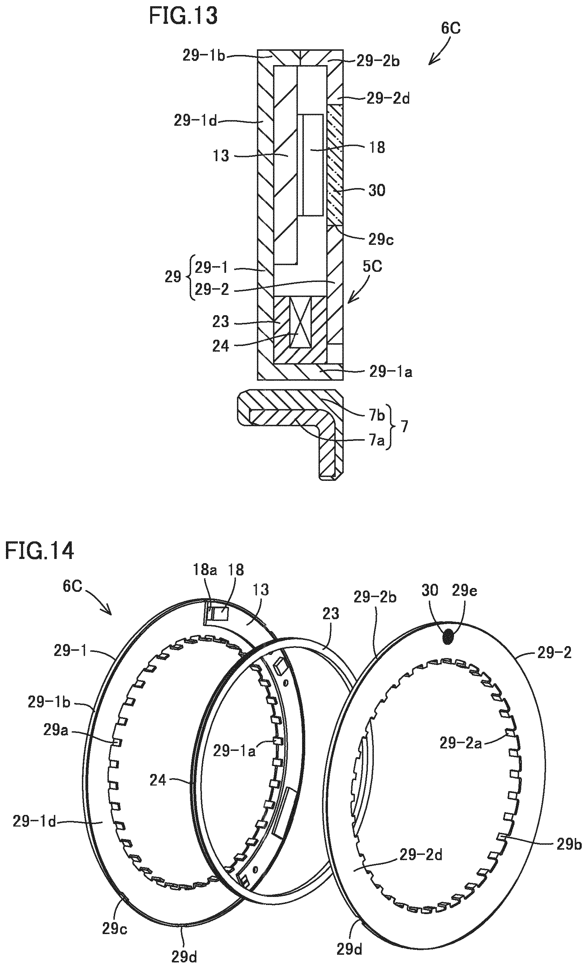

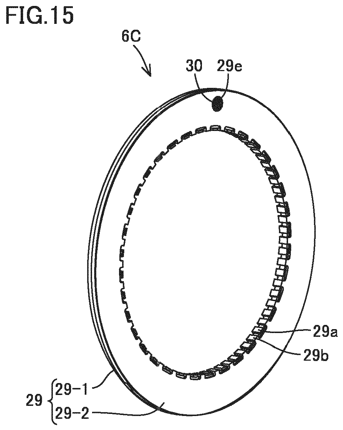

In the fourth embodiment, a sensor unit 6C different in structure from sensor unit 6 in the first embodiment will be described. Fig. 13 is a cross-sectional view showing only sensor unit 6C and magnetic ring 7 in the fourth embodiment. Fig. 14 is an exploded perspective view of sensor unit 6C according to the fourth embodiment. Fig. 15 is a perspective view of sensor unit 6C according to the fourth embodiment after assembly. In the following, the description of the same configurations as those of sensor unit 6 in the first embodiment will not be repeated.

Sensor unit 6C includes circuit board 13 and a stator 5C. In sensor unit 6C, a cage member itself that holds stator 5C is formed by a magnetic member 29 that extends in the radial direction of bearing 2. Magnetic member 29 includes a magnetic member 29-1 and a magnetic member 29-2. Magnetic member 29-1 has an annular shape and has a U-shaped cross section including an outer circumferential portion 29-1b, an inner circumferential portion 29-1a, and a bottom portion 29-1d connecting outer circumferential portion 29-1b and inner circumferential portion 29-1a. Inner circumferential portion 29-1a is formed by a plurality of claw portions 29a.

Magnetic member 29-2 has an annular shape and has a U-shaped cross section including an outer circumferential portion 29-2b, an inner circumferential portion 29-2a, and a bottom portion 29-2d connecting outer circumferential portion 29-2b and inner circumferential portion 29-2a. Inner circumferential portion 29-2a is formed by a plurality of claw portions 29b. The plurality of claw portions 29a and the plurality of claw portions 29b are alternately arranged with a gap interposed therebetween in the circumferential direction.

Magnetic members 29-1 and 29-2 have outer circumferential portions 29-1b and 29-2b provided with a plurality of protrusions 29c and a plurality of recesses 29d, respectively. By engagement between protrusions 29c and recesses 29d, the plurality of claw portions 29a and the plurality of claw portions 29b are easily positionally aligned. Magnetic member 29 is disposed at one end of bearing 2.

Bobbin 23 wound with coil 24 is disposed on the inner circumferential side on which the plurality of claw portions 29a and the plurality of claw portions 29b are arranged. Circuit board 13 is disposed on the outer circumferential side opposite to coil 24 in the radial direction of bearing 2. Circuit board 13 is fixed, for example, to bottom portion 29-1d of magnetic member 29-1 with screws (not shown). A hole portion 29e is provided at a position (in bottom portion 29-2d) on the side surface of magnetic member 29-2 that faces the position at which antenna portion 18a of wireless communication circuit 18 is disposed.

Hole portion 29e is closed by a resin member 30 that is a non-conductive member. Thereby, sensor unit 6C can transmit radio waves of wireless communication to the outside through hole portion 29e, and also, can prevent intrusion of foreign matter into the internal space of magnetic member 29 from the outside, to thereby protect coil 24, circuit board 13, and the like disposed therein. Further, a resin sealing material may be introduced through hole portion 29e to cover circuit board 13 and the like with a resin material. In this case, a plurality of hole portions should only be provided in the circumferential direction in bottom portion 29-2d of magnetic member 29-2, and a resin sealing material should only be introduced through these hole portions to thereby prevent air bubbles from remaining in the internal space of magnetic member 29.

In sensor unit 6C, circuit board 13 is mounted in the internal space formed by magnetic members 29-1 and 29-2. Thereby, circuit board 13 can be protected by magnetic member 29. In sensor unit 6C, the cage member itself is formed of magnetic member 29-1, and magnetic member 29-2 also serves as a lid, so that the number of components can be reduced.

### (Modifications)

The above embodiments have been described with regard to the example in which outer ring 3 is a stationary ring and inner ring 4 is a rotation ring, but outer ring 3 may be a rotation ring and inner ring 4 may be a stationary ring. In this case, magnetic ring 7 should only be fixed to outer ring 3, and sensor units 6, 6A, 6B, and 6C should only be fixed to inner ring 4.

### (Summary)

Bearing device 1 of the present disclosure includes: bearing 2 including outer ring 3, inner ring 4, and rolling element 8; magnetic ring 7 fixed to one of outer ring 3 or inner ring 4; stator 5 disposed to face magnetic ring 7 in the radial direction of bearing 2 and fixed to the other of outer ring 3 or inner ring 4; and circuit board 13. Magnetic ring 7 and stator 5 constitute generator G that generates AC power. Circuit board 13 includes: at least one sensor (for example, acceleration sensor 15 and temperature sensor 16) that detects the state of bearing 2; wireless communication circuit 18 that wirelessly transmits an output form the at least one sensor to outside; and power supply circuit 17 that converts AC power generated by generator G into DC power usable by the at least one sensor and wireless communication circuit 18. Inside the annular space formed by an end portion of outer ring 3 and an end portion of inner ring 4, magnetic ring 7, stator 5, and circuit board 13 are disposed so as not to overlap with each other in the axial direction of bearing 2.

By providing such a configuration, magnetic ring 7, stator 5, and circuit board 13 are disposed inside the annular space so as not to overlap with each other in the axial direction of bearing 2. Thereby, each component can be disposed inside the annular space, so that the bearing 2 can be reduced in dimensions. Further, in bearing device 1, for example, magnetic ring 7 is fixed to inner ring 4, and stator 5 is fixed to outer ring 3 at a position facing magnetic ring 7. The displacement of inner ring 4 and outer ring 3 in the axial direction of bearing 2 is relatively small, and thereby, the stable amount of power generation can be ensured by generator G, so that the bearing device is reduced in dimensions and still capable of functioning normally.

Preferably, the annular space is formed by: first cutout portion 3a formed in the inner circumferential surface at one end of outer ring 3; and second cutout portion 4a formed in the outer circumferential surface at one end of inner ring 4 so as to face first cutout portion 3a.

By providing such a configuration, each component can be disposed in the annular space formed by first cutout portion 3a and second cutout portion 4a, so that bearing 2 can be reduced in dimensions.

Preferably, cage member 12 that holds circuit board 13 and stator 5 is fixed to one of first cutout portion 3a or second cutout portion 4a, and magnetic ring 7 is fixed to the other of first cutout portion 3a or second cutout portion 4a.

By providing such a configuration, for example, cage member 12 that holds circuit board 13 and stator 5 is fixed to first cutout portion 3a, and magnetic ring 7 is fixed to second cutout portion 4a. Thus, stator 5 and magnetic ring 7 are fixed to a component with less rattling caused by the use of bearing device 1, and therefore, the stable amount of power generation can be ensured by generator G.

Preferably, cage member 12 is a magnetic material having partition wall 12a that partitions cage member 12 into first region 12b and second region 12c in the radial direction of bearing 2. A portion of cage member 12 that includes first region 12b or second region 12c is used as stator 5.

By providing such a configuration, for example, cage member 12 is divided by partition wall 12a into two regions including first region 12b and second region 12c. The portion of cage member 12 that includes first region 12b is used for holding circuit board 13, and the portion of cage member 12 that includes second region 12c also serves as magnetic member 21. Thus, in bearing device 1, the number of components can be reduced, and stator 5 can be firmly fixed to cage member 12.

Preferably, cage member 12A has an annular shape and has a U-shaped cross section including outer circumferential portion 12Ab, inner circumferential portion 12Aa, and bottom portion 12Ad connecting outer circumferential portion 12Ab and inner circumferential portion 12Aa. Stator 5 is fixed to outer circumferential portion 12Ab or inner circumferential portion 12Aa, and circuit board 13 is fixed to bottom portion 12Ad.

By providing such a configuration, cage member 12A has a U-shaped cross section and has a simple shape, and thus, can be easily pressed, so that the manufacturing cost can be reduced.

Preferably, stator 5B includes coil 24, magnetic member 27 provided with the plurality of claw portions 27d, and magnetic member 28 provided with the plurality of claw portions 28d. Coil 24 is accommodated in an internal space formed by combining magnetic members 27 and 28. Cage member 12B is magnetic member 27. Magnetic member 27 has an annular shape and has a U-shaped cross section including outer circumferential portion 27a, inner circumferential portion 27b, and bottom portion 27c connecting outer circumferential portion 27a and inner circumferential portion 27b. Inner circumferential portion 27b is formed by the plurality of claw portions 27d. Bottom portion 27c is provided with the plurality of recesses 27e that are spaced apart from each other in the circumferential direction of bearing 2. Magnetic member 28 has an annular shape and has a U-shaped cross section including outer circumferential portion 28a, inner circumferential portion 28b, and bottom portion 28c connecting outer circumferential portion 28a and inner circumferential portion 28b. Inner circumferential portion 28b is formed by the plurality of claw portions 28d each facing a corresponding one of the plurality of claw portions 27d. The plurality of protrusions 28e spaced apart from each other in the circumferential direction of bearing 2 are formed at the end portion in outer circumferential portion 28a in the axial direction of bearing 2. By the engagement between the plurality of recesses 27e and the plurality of protrusions 28e, the plurality of claw portions 27d and the plurality of claw portions 28d are alternately arranged with a gap interposed therebetween in the circumferential direction of bearing 2.

By providing such a configuration, cage member 12B functions also as magnetic member 27, and thus, the number of components can be reduced. Magnetic members 27 and 28 each have a U-shaped cross section and have a simple shape, and thus, can be easily pressed, so that the manufacturing cost can be reduced. By engagement between each recess 27e and each protrusion 28e, a jig does not have to be used to allow coaxial alignment between two magnetic members 27 and 28, and also allow easy positional alignment between the plurality of claw portions 27d and 28d.

Preferably, stator 5C includes coil 24, magnetic member 29-1 provided with the plurality of claw portions 29a, and magnetic member 29-2 provided with the plurality of claw portions 29b. Coil 24 is accommodated in an internal space formed by combining magnetic members 29-1 and 29-2. The cage members are magnetic member 29-1 and magnetic member 29-2. Magnetic member 29-1 has an annular shape and has a U-shaped cross section including outer circumferential portion 29-1b, inner circumferential portion 29-1a, and bottom portion 29-1d connecting outer circumferential portion 29-1b and inner circumferential portion 29-1a. Outer circumferential portion 29-1b or inner circumferential portion 29-1a is formed by the plurality of claw portions 29a. Magnetic member 29-2 has an annular shape and has a U-shaped cross section including outer circumferential portion 29-2b, inner circumferential portion 29-2a, and bottom portion 29-2d connecting outer circumferential portion 29-2b and inner circumferential portion 29-2a. Outer circumferential portion 29-2b or inner circumferential portion 29-2a is formed by the plurality of claw portions 29b. Magnetic member 29 is disposed at one end of bearing 2. The plurality of claw portions 29a and the plurality of claw portions 29b are alternately arranged with a gap interposed therebetween in the circumferential direction of bearing 2. Coil 24 is disposed on the side on which the plurality of claw portions 29a and the plurality of claw portions 29b are located. Circuit board 13 is disposed on the side opposite to coil 24 in the radial direction of the bearing. Wireless communication circuit 18 includes antenna portion 18a. Hole portion 29e is provided at a position of a side surface of magnetic member 29-2 that faces the position at which antenna portion 18a is disposed.

By providing such a configuration, the cage member itself is formed by magnetic member 29-1, and magnetic member 29-2 also serves as a lid, so that the number of components can be reduced. Further, radio waves of wireless communication can be transmitted to the outside through hole portion 29e, and also, foreign matter can be prevented from intruding into the internal space of magnetic member 29 from the outside, so that coil 24, circuit board 13, and the like provided therein can be protected.

Bearing device 1 of the present disclosure includes standard bearing 2 as a bearing that includes outer ring 3, inner ring 4, and rolling element 8, the bearing having main dimensions defined under specific standards. Bearing device 1 includes: magnetic ring 7 fixed to one of outer ring 3 or inner ring 4; stator 5 disposed to face magnetic ring 7 in the radial direction of standard bearing 2 and fixed to the other of outer ring 3 or inner ring 4; and circuit board 13. Magnetic ring 7 and stator 5 constitute generator G that generates AC power. Circuit board 13 includes: at least one sensor (for example, acceleration sensor 15 and temperature sensor 16) that detects the state of standard bearing 2; wireless communication circuit 18 that wirelessly transmits an output from the at least one sensor to outside; and power supply circuit 17 that converts AC power generated by generator G into DC power usable by the at least one sensor and wireless communication circuit 18. Magnetic ring 7, stator 5, and circuit board 13 are disposed inside an annular space formed by an end portion of outer ring 3 and an end portion of inner ring 4.

By providing such a configuration, each component can be disposed inside the annular space, so that standard bearing 2 can be reduced in dimensions. Further, in bearing device 1, for example, magnetic ring 7 is fixed to inner ring 4, and stator 5 is fixed to outer ring 3 at a position facing magnetic ring 7. The displacement of inner ring 4 and outer ring 3 in the axial direction of bearing 2 is relatively small, and thus, the stable amount of power generation can be ensured by generator G, so that the bearing device is reduced in dimensions and still capable of functioning normally.

Preferably, inside the annular space, magnetic ring 7, stator 5, and circuit board 13 are disposed so as not to overlap with each other in the axial direction of standard bearing 2.

By providing such a configuration, each component can be disposed inside the annular space, so that standard bearing 2 can be reduced in dimensions.

Preferably, circuit board 13 has an arc shape. The at least one sensor, wireless communication circuit 18, and power supply circuit 17 are disposed on a circumference of circuit board 13 so as not to overlap with each other in the axial direction.

By providing such a configuration, a plurality of electronic components can be disposed on the circumference of circuit board 13 without increasing the thickness in the axial direction of standard bearing 2, and thus, standard bearing 2 can be reduced in dimensions.

Preferably, the specific standards are ISO standards or JIS standards.

By providing such a configuration, the present invention can be applied to a standard bearing having dimensions defined in ISO standards or JIS standards.

Preferably, standard bearing 2 is a radial bearing. The main dimensions of the radial bearing are dimensions defined in ISO 15 or JIS B 1512-1.

By providing such a configuration, the present invention can be applied to a standard bearing having dimensions defined in ISO 15 or JIS B 1512-1.

The following describes a bearing device and a sensor unit according to each of the fifth to eighth embodiments. For the purpose of monitoring the state of a rolling bearing for device maintenance, a bearing device including a sensor located adjacent to a bearing is used. For the purpose of transmitting the data detected by the sensor with high convenience, the bearing device may have a configuration that allows wireless transmission of this data.

An example of the above-mentioned bearing device is disclosed, for example, in Japanese Patent Laying-Open No. 2017-72170. In Japanese Patent Laying-Open No. 2017-72170, a multipole ring magnet is provided on one axial end face of a cage forming a bearing, an annular seal is provided to close a space between an inner ring and an outer ring, and a coil for power generation and a wireless processing circuit are mounted on a surface of the annular seal that faces the multipole ring magnet.

In the bearing device disclosed in Japanese Patent Laying-Open No. 2017-72170, if the annular seal is made of metal, the radio waves transmitted from the wireless processing circuit are blocked and cannot be transmitted to the outside of the bearing. This is because the coil for power generation and the wireless processing circuit are disposed to face the inside in the axial direction (toward the rolling element). On the other hand, when the annular seal is made of non-metal such as a resin or is provided with a slit or the like sufficiently to allow radio waves to pass therethrough, the radio waves can be transmitted to the outside of the bearing. In this case, however, the annular seal is made of resin, and thus, decreased in rigidity. This may impede the operation of the bearing device when it is vibrating.

The present disclosure has been made in view of the above-described problems. An object of the present disclosure is to provide a bearing device that allows stable wireless transmission of radio waves to the outside of the bearing.

A bearing device according to the present disclosure includes a bearing and a cage member. The bearing includes an outer ring, an inner ring, a rolling element, and a cage that holds a plurality of the rolling elements at intervals in a circumferential direction. The cage is shaped to be open on one end face side and to be connected on the other end face side in an axial direction. The cage member is disposed at a position on the one end face side across the rolling element from the cage. The cage member is fixed to one of the outer ring and the inner ring. The cage member is made of metal. The cage member includes a side plate portion having a width in a radial direction and extending in the circumferential direction. At least a part of a power supply configured to generate electric power and a circuit board are fixed to the cage member. The circuit board is fixed to a surface of the side plate portion on a side not facing the rolling element in the axial direction.

According to the present disclosure, it is possible to provide a bearing device that allows stable wireless transmission of radio waves to the outside of the bearing.

### [Fifth Embodiment]

### <Configuration of Bearing Device>

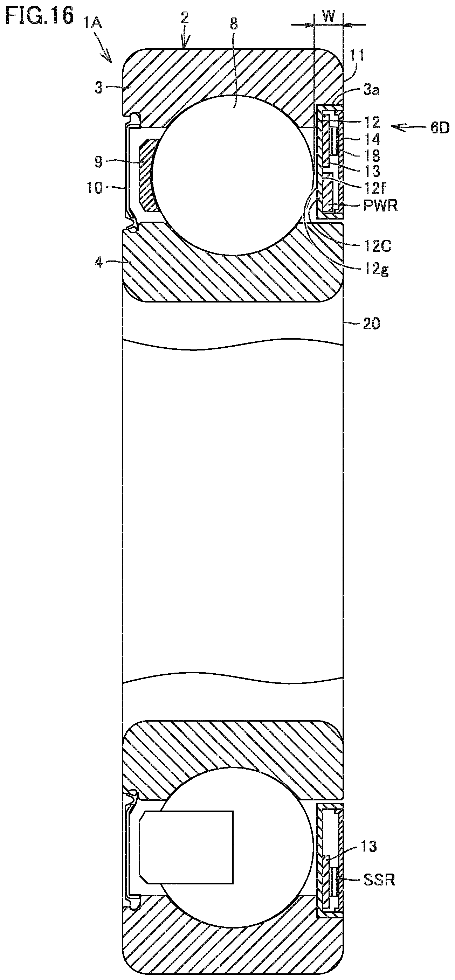

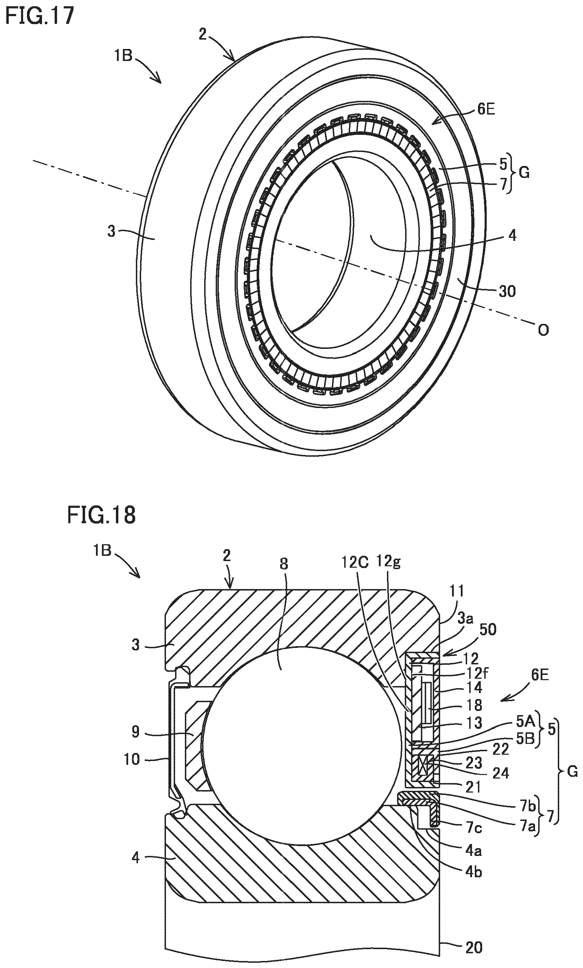

Fig. 16 is a cross-sectional view of a bearing device 1A according to the fifth embodiment. This corresponds, for example, to a cross-sectional view along a plane including rotation axis O in Fig. 17 in the sixth embodiment described later. In Fig. 16, the position of each member fixed to cage member 12 does not necessarily coincide with the actual position. Referring to Fig. 16, bearing device 1A in the present embodiment includes bearing 2 and a sensor unit 6D. In this case, bearing 2 is a standard bearing having axial dimensions defined in specific standards. The standard bearing is, for example, a bearing having dimensions defined in ISO standards or JIS standards. Bearing 2 is a radial bearing, and its dimension from one end portion to the other end portion in its axial direction is defined in ISO 15 or JIS B 1512-1. In the following, bearing 2 is also referred to as standard bearing 2.

Bearing 2 includes outer ring 3, inner ring 4, rolling element 8, cage 9, and seal 10. In bearing 2, for example, outer ring 3 serves as a stationary ring and inner ring 4 serves as a rotation ring. Although a deep groove ball bearing will be described as an example of bearing 2, the type of bearing 2 is not limited to such a deep groove ball bearing. Bearing 2 should only be selected from those having a size of the model number of the standard bearing having a distance W between end face 11 of bearing 2 and rolling element 8 such that sensor unit 6D can be accommodated within distance W. End face 11 is also an end face of outer ring 3.

A plurality of rolling elements 8 are arranged at intervals in the circumferential direction of bearing 2 (in the depth direction in Fig. 16). Cage 9 holds the plurality of rolling elements 8. Cage 9 is a resin-made member. Cage 9 is open on the one end face side (on the right side in Fig. 16) in the left-right direction in Fig. 16 that corresponds to the axial direction. Cage 9 is connected on the other end face side (on the left side in Fig. 16) in the axial direction. Thus, in Fig. 16, cage 9 is disposed only in a region substantially on the left side of the center of rolling element 8, and is not disposed in a region on the right side of the center of rolling element 8.

Sensor unit 6D includes cage member 12, circuit board 13, and lid 14. Cage member 12 is a magnetic material and is made of metal. Cage member 12 is disposed at a position on the one end face side (on the right side in Fig. 16) across rolling element 8 from cage 9. In other words, cage member 12 is disposed on the side where cage 9 is open and is not disposed in the axial direction. Cage member 12 is disposed at a position where cage 9 should originally be disposed.

Cage member 12 includes a side plate portion 12C. Side plate portion 12C has a width sufficient to extend from outer ring 3 to inner ring 4 in the radial direction of bearing 2 (in the vertical direction in Fig. 16). Side plate portion 12C extends in the circumferential direction, i.e., so as to be formed in an annular shape. In other words, side plate portion 12C extends continuously in the circumferential direction (by one round). Cage member 12 is formed of side plate portion 12C and an outside surface and an inside surface in the radial direction.

Side plate portion 12C is disposed to be adjacent to rolling element 8 at a position of cage member 12 that is closest to rolling element 8 in the axial direction (on the inner side within bearing 2). Side plate portion 12C has a rear surface 12g on the side facing rolling element 8, and a front surface 12f on the side opposite to rear surface 12g (i.e., on the side not facing rolling element 8). In other words, rear surface 12g faces the inner side of bearing 2, and front surface 12f faces the outer side of bearing 2.

At least a part of a power supply PWR capable of generating electric power and circuit board 13 are fixed to cage member 12. Power supply PWR in Fig. 16 may be, for example, a power supply in any one of the following sixth to eighth embodiments, or may be a power supply of another type. In other words, power supply PWR in Fig. 16 is a generic term of a power supply regardless of the type. Circuit board 13 is fixed to front surface 12f of side plate portion 12C of cage member 12.

One or more sensors SSR for monitoring and detecting the state of bearing 2 are mounted on circuit board 13. Sensor SSR in Fig. 16 may be, for example, a sensor shown in any one of the following sixth to eighth embodiments, or may be a sensor of another type. In other words, sensor SSR in Fig. 16 is a generic term of a sensor regardless of the type. Wireless communication circuit 18 is further mounted on circuit board 13.

Lid 14 is a non-metal (resin-made) sealing member that covers circuit board 13. Lid 14 protects circuit board 13 fixed to cage member 12 and protects the inside of sensor unit 6D. Instead of lid 14, a resin sealing material may be used to seal circuit board 13. Lid 14 also protects members (for example, wireless communication circuit 18, sensor SSR, and the like) other than circuit board 13 that are fixed to front surface 12f of side plate portion 12C.

The outside surface of cage member 12 on the radially outer side is fitted in and fixed to first cutout portion 3a formed in outer ring 3. In particular, when inner ring 4 serves as a stationary ring, cage member 12 may be fixed to inner ring 4. Cage member 12 is press-fitted or bonded so as not to protrude outward in the axial direction from end face 11 of outer ring 3. Cage member 12 may be fixed by both press-fitting and bonding, or may be fixed by other methods. When cage member 12 is fixed to first cutout portion 3a, a certain gap is ensured between rolling element 8 and cage member 12. Thereby, even when displacement in the axial direction occurs between rolling element 8 and cage member 12, the gap can prevent contact between rolling element 8 and cage member 12.

Cage member 12 is disposed so as not to protrude outward in the axial direction from end face 11 of outer ring 3, and thereby, circuit board 13 and power supply PWR fixed to cage member 12 are also similarly disposed so as not to protrude outward in the axial direction from end face 11 of outer ring 3. Note that cage member 12, circuit board 13, and power supply PWR are preferably disposed so as not to protrude outward in the axial direction from end face 20 of inner ring 4.

### <Functions and Effects>

Bearing device 1A according to the present disclosure includes bearing 2 and cage member 12. Bearing 2 includes outer ring 3, inner ring 4, rolling element 8, and cage 9 that holds a plurality of rolling elements 8 at intervals in the circumferential direction. Cage 9 is shaped to be open on the one end face side and to be connected on the other end face side in the axial direction. Cage member 12 is disposed at a position on the one end face side across rolling element 8 from cage 9. Cage member 12 is fixed to one of outer ring 3 and inner ring 4. Cage member 12 is made of metal. Cage member 12 includes side plate portion 12C having a width in the radial direction and extending in the circumferential direction. At least a part of power supply PWR capable of generating electric power and circuit board 13 are fixed to cage member 12. Circuit board 13 is fixed to a surface (front surface 12f) of side plate portion 12C on a side not facing rolling element 8 in the axial direction.

In bearing device 1A described above, one end face of cage 9 in the axial direction is opened, so that this opened portion (the portion in which cage 9 is originally disposed) is provided with a space in which circuit board 13, power supply PWR, and the like are disposed. In other words, a space in which circuit board 13 and power supply PWR are disposed is effectively provided inside bearing 2. Further, sensor SSR for detecting the operating state of bearing 2 can be disposed in the above-mentioned space. Thereby, sensor SSR can be disposed at a position significantly close to bearing 2, which makes it possible to detect an abnormality in bearing 2 by sensor SSR with high accuracy.

Cage member 12 is made of metal, and thereby, can hold circuit board 13 and sensor SSR installed therein so as to ensure high rigidity. Therefore, even when cage member 12 is directly fixed to bearing 2 that is to vibrate, any erroneous operation of sensor SSR can be suppressed. Thus, even in an environment of use in which vibrations are applied, bearing device 1A allows stable monitoring of the state of bearing 2 by sensor SSR and also allows stable wirelessly transmission of data detected by sensor SSR.

Since circuit board 13 is fixed to front surface 12f, circuit board 13 is fixed on cage member 12 so as to face the outside of bearing 2. Thus, even if cage member 12 is made of metal, it is possible to suppress a problem that radio waves transmitted from wireless communication circuit 18 or the like mounted on circuit board 13 are blocked and thereby cannot be transmitted to the outside of bearing 2. In other words, wireless transmission of radio waves to the outside of bearing 2 can be stably performed.

As described above, according to the present disclosure, it is possible to provide compact bearing device 1A that allows stable wireless transmission of radio waves to the outside of bearing 2 while ensuring rigidity.

In bearing device 1A described above, it is preferable that at least one sensor SSR that detects the state of bearing 2 and wireless communication circuit 18 that wirelessly transmits the output from sensor SSR to the outside are mounted on circuit board 13. Thereby, wireless transmission of radio waves to the outside of bearing 2 can be stably performed as described above.

In bearing device 1A described above, cage member 12, circuit board 13, and power supply PWR may be disposed so as not to protrude outward in the axial direction from end face 11 of outer ring 3. Thereby, in bearing device 1A, sensor unit 6D can be formed to be thin in the axial direction.

### (Sixth Embodiment)

### <Configuration of Bearing Device>

In the following description of a bearing device in each of the embodiments, the same components as those of the bearing device in each of the above-described embodiments are denoted by the same reference characters, and the description thereof will not be repeated unless there is a difference in configuration and function. In the sixth embodiment, an electromagnetic induction-type generator is used as power supply PWR provided in bearing device 1A of the fifth embodiment. Fig. 17 is a perspective view of the entirety of a bearing device according to the sixth embodiment. Referring to Fig. 17, a bearing device 1B includes bearing 2, a sensor unit 6E, and magnetic ring 7.

Sensor unit 6E includes cage member 12, circuit board 13, lid 14, and stator 5. Circuit board 13 is fixed to a radially outer region in side plate portion 12C of cage member 12, and stator 5 is disposed so as to include the entirety of cage member 12.

Lid 14 is a non-metal resin member and protects the inside of sensor unit 6E. Lid 14 in the present embodiment may be disposed to cover a region other than stator 5 as shown in Fig. 18. Alternatively, lid 14 may be disposed to cover a region including stator 5. In any case, lid 14 covers circuit board 13.

Stator 5 includes two magnetic members 21 and 22, bobbin 23, and coil 24. A portion of cage member 12 is used as magnetic member 21 of stator 5.

Magnetic ring 7 is a magnetic member in which N poles and S poles are alternately magnetized in the circumferential direction. Stator 5 is fixed to outer ring 3, and magnetic ring 7 is fixed to inner ring 4. Stator 5 and magnetic ring 7 constitute generator G. Generator G is a claw pole-type generator but may be a generator having another structure. Fig. 17 shows a one-dot chain line indicating rotation axis O of bearing 2.

Fig. 18 is a cross-sectional view along a plane including the rotation axis of the bearing. Referring to Fig. 18, the inner circumferential surface at one end of outer ring 3 is provided with first cutout portion 3a formed as a stepped portion as in the fifth embodiment. Further, the outer circumferential surface at one end of inner ring 4 is provided with second cutout portion 4a formed as a stepped portion so as to face first cutout portion 3a. In the axial direction (also referred to as axially) of bearing 2, annular recess 50 that is cut out toward rolling element 8 is formed by first cutout portion 3a and second cutout portion 4a so as to extend from outer ring 3 to inner ring 4.

Magnetic ring 7 includes core metal 7a and multipole magnet 7b. Multipole magnet 7b is formed, for example, by kneading magnetic powder with rubber to obtain a magnetic material, which is then vulcanized and bonded to core metal 7a, to which N poles and S poles are alternately magnetized in the circumferential direction of bearing 2. Core metal 7a of magnetic ring 7 has flange portion 7c in order to increase rigidity. Magnetic ring 7 is fixed to outside surface 4b of inner ring 4 by press-fitting or the like. Flange portion 7c is accommodated in second cutout portion 4a provided in inner ring 4. Magnetic ring 7 is disposed so as not to protrude from end face 20 of inner ring 4.

Inside annular recess 50, magnetic ring 7, stator 5, and circuit board 13 are disposed so as not to overlap with each other in the radial direction of bearing 2. Thereby, each component can be disposed inside this annular recess 50, which makes it possible to reduce the thickness in the axial direction of bearing 2. Further, in bearing device 1B, for example, magnetic ring 7 is fixed to inner ring 4, and stator 5 is fixed to outer ring 3 at a position facing magnetic ring 7. The displacement of inner ring 4 and outer ring 3 in the axial direction of bearing 2 is relatively small as compared with cage 9, and thus, the stable amount of power generation can be ensured by generator G.

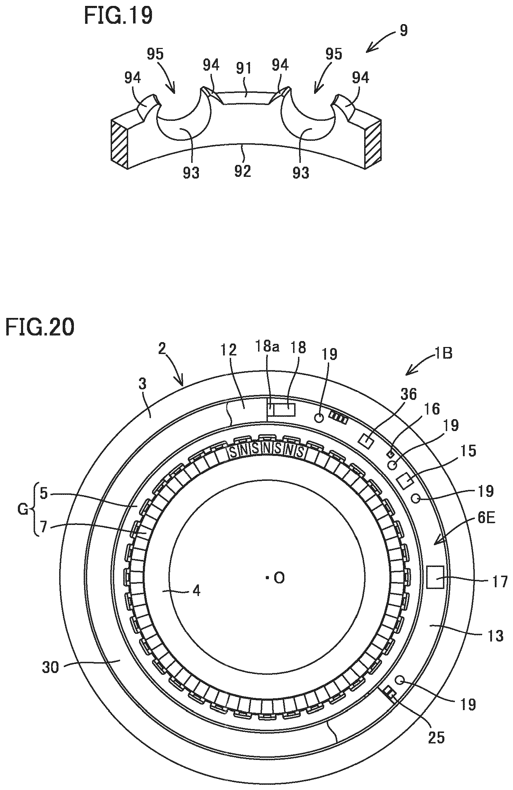

Fig. 19 is a diagram for illustrating cage 9. Referring to Fig. 19, cage 9 is provided with recesses 93 formed at a prescribed pitch in the circumferential direction of end face 91 in the axial direction of the annular cage body. A pair of claw portions 94 and 94 are formed to protrude from opening ends of recess 93 that face each other in the circumferential direction of recess 93. Recess 93 and the pair of claw portions 94 and 94 form pocket 95 in which rolling element 8 shown in Fig. 18 is accommodated. In this way, cage 9 is shaped to be open on the end face 91 side as one side and to be connected on the end face 92 side as the other side. Cage 9, which is a resin-made member, is disposed on the open side such that sensor unit 6E and magnetic ring 7 do not protrude from end faces 11 and 20.

Fig. 20 is a diagram of bearing device 1B viewed from the sensor unit 6E side. Fig. 20 does not show a part of lid 14 such that the inside of sensor unit 6E can be seen. Referring to Fig. 20, one or more sensors for monitoring the state of bearing 2 are mounted on circuit board 13. For example, acceleration sensor 15 and temperature sensor 16 are mounted on circuit board 13. Further, an acoustic emission (AE) sensor 36 may also be mounted on circuit board 13. AE sensor 36 may be mounted on side plate portion 12C of cage member 12. In other words, AE sensor 36 may be mounted, for example, in a portion immediately below terminal 25 in Fig. 20 through which side plate portion 12C of cage member 12 is exposed. Note that temperature sensor 16 may be inserted through a hole (not shown) provided in side plate portion 12C of cage member 12 and then mounted on the rear surface of circuit board 13 so as to be located close to (or to be in contact with) the end face of first cutout portion 3a of outer ring 3. Thereby, temperature sensor 16 is located close to outer ring 3 and thereby can accurately measure the temperature of bearing 2.

On circuit board 13, power supply circuit 17 and wireless communication circuit 18 are further mounted. Power supply circuit 17 rectifies AC power generated by generator G and converts the rectified AC power into DC power. In other words, power supply circuit 17 is completely different from power supply PWR (see Fig. 16), i.e., generator G (an electromagnetic induction-type generator) in the present embodiment. The DC power converted by power supply circuit 17 is used in acceleration sensor 15, temperature sensor 16, and wireless communication circuit 18. Terminal 25 is disposed on circuit board 13.

Wireless communication circuit 18 includes antenna portion 18a. Wireless communication circuit 18 wirelessly transmits the outputs from acceleration sensor 15 and temperature sensor 16, which monitor the state of bearing 2, to the outside through antenna portion 18a. Circuit board 13 is fixed to cage member 12 with a plurality of screws 19. Circuit board 13 may be bonded and fixed to cage member 12. Circuit board 13 on which wireless communication circuit 18 is mounted is disposed to face lid 14 made of resin. Thereby, wireless communication circuit 18 has a structure not hermetically sealed with a conductive material such as metal. This allows wireless communication through antenna portion 18a in wireless communication circuit 18.

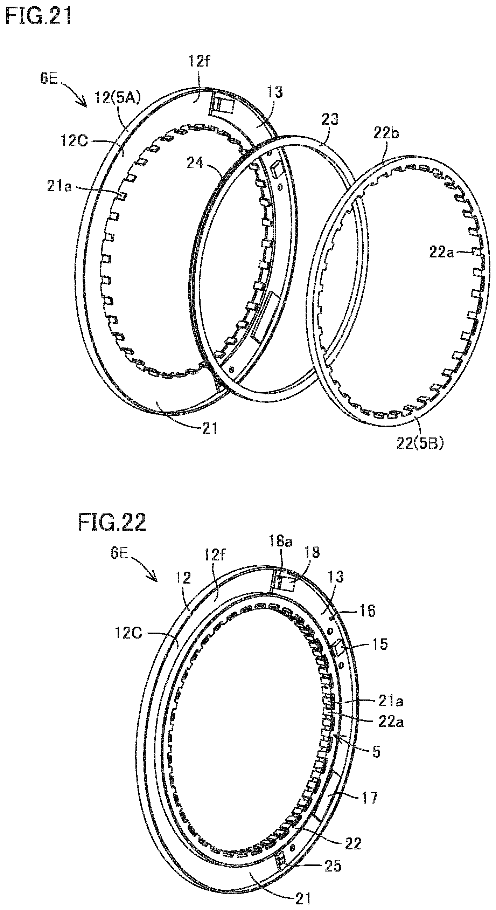

Fig. 21 is an exploded perspective view of sensor unit 6E according to the sixth embodiment. Fig. 22 is a perspective view of sensor unit 6E according to the sixth embodiment after assembly. Referring to Figs. 21 and 22, circuit board 13 is fixed to front surface 12f of side plate portion 12C of cage member 12 that does not face rolling element 8. Circuit board 13 is disposed in a region of front surface 12f on the relatively outer side in the radial direction. Stator 5 includes stators 5A and 5B. Stator 5A corresponds to cage member 12 and corresponds to magnetic member 21. Stator 5B corresponds to magnetic member 22. In other words, stator 5A, cage member 12, and magnetic member 21 are the same, and stator 5B and magnetic member 22 are the same.

Each of magnetic members 21 and 22 has a U-shaped cross section. Magnetic member 21 occupies the entirety of cage member 12, whereas magnetic member 22 is disposed in a region of cage member 12 on the radially inner side. The region on the radially inner side in the U-shaped cross section of magnetic member 21 faces the U-shaped cross section of magnetic member 22. Coil 24 including bobbin 23 is mounted between magnetic members 21 and 22 facing each other so as to be surrounded by magnetic members 21 and 22. The plurality of claw portions 21a are formed on an inner circumferential portion of magnetic member 21. The plurality of claw portions 22a are formed on an inner circumferential portion of magnetic member 22. Coil 24 around which a magnet wire is wound a plurality of times is disposed in a groove provided in bobbin 23 in its circumferential direction. Bobbin 23 may not be provided.

The structure in the above-described fifth embodiment that corresponds to that shown in the perspective view of sensor unit 6E in Fig. 22 does not include stator 5, the plurality of claw portions 21a, and the plurality of claw portions 22a, but other components are the same as those in Fig. 22.

The following describes an assembly method for stator 5. First, in the state in which bobbin 23 wound with coil 24 is inserted into magnetic member 22, the plurality of claw portions 21a of magnetic member 21 and the plurality of claw portions 22a of magnetic member 22 are assembled to be alternately arranged with a gap interposed therebetween in the circumferential direction. Then, outer circumferential surface 22b of magnetic member 22 is fixed such that its end portion comes into contact with front surface 12f of side plate portion 12C of magnetic member 21. At this time, the openings of magnetic members 21 and 22 face each other, and bobbin 23 and coil 24 are accommodated in these openings.

The plurality of claw portions 21a of magnetic member 21 and the plurality of claw portions 22a of magnetic member 22 are disposed to face each other while ensuring a gap between each of claw portions 21a, 22a and multipole magnet 7b of magnetic ring 7 shown in Fig. 18. Claw pole-type generator G is formed by magnetic ring 7 and the plurality of claw portions 21a of magnetic member 21 and the plurality of claw portions 22a of magnetic member 22 in stator 5. The total number of the plurality of claw portions 21a and 22a is equal to the number of poles (the total number of the N and S poles) in multipole magnet 7b.

The magnetic flux emitted from the N pole of multipole magnet 7b, for example, flows from the plurality of claw portions 21a (or the plurality of claw portions 22a), each of which is a magnetic pole, into magnetic member 21 (or magnetic member 22), flows around coil 24, and passes through the plurality of claw portions 22a (or the plurality of claw portions 21a) adjacent thereto, and then flows back to the S pole of multipole magnet 7b. When the positions of the N pole and the S pole of multipole magnet 7b are replaced with each other by the rotation of inner ring 4, the direction of the magnetic flux is reversed. The alternating magnetic field generated in this way generates AC power at both ends of coil 24.

Each of the ends (not shown) of the winding start and the winding end of coil 24 pulled out of stator 5 is connected to terminal 25 provided on circuit board 13. The AC power output from generator G by the rotation of inner ring 4 is converted into DC power by power supply circuit 17.

Sensor unit 6E of bearing device 1B may be divided by a partition wall (not shown) into two regions in the radial direction of cage member 12. Also in this case, similarly to the above, circuit board 13 is disposed in the region on the outer side in the radial direction, and stator 5 in claw pole-type generator G is disposed in the region on the inner side. Magnetic ring 7 is disposed on side of the inside diameter to face stator 5.

### <Functions and Effects>

Bearing device 1B in the present embodiment has the following features in addition to the configuration in the fifth embodiment. Power supply PWR (see Fig. 16) is an electromagnetic induction-type generator (generator G) including: magnetic ring 7 fixed to the other one different from one of outer ring 3 and inner ring 4; and coil 24 mounted on cage member 12 to face magnetic ring 7 in the radial direction of bearing 2. As multipole magnet 7b, a plurality of permanent magnets may be fixed to magnetic ring 7, or a magnetic body having a plurality of magnetic poles may be fixed to magnetic ring 7.

In bearing device 1B, stator 5 and magnetic ring 7 are disposed in the radial direction to constitute claw pole-type generator G. Thus, in stator 5 and magnetic ring 7, the stable amount of power generation can be ensured by generator G. Since the electric power generated in this case can be used in wireless communication circuit 18, wireless transmission of radio waves to the outside of bearing 2 can be stably performed.

In bearing device 1B according to the present embodiment, only a part of the power supply capable of generating electric power is fixed to cage member 12. Generator G as a power supply is an electromagnetic induction-type generator, which includes magnetic ring 7 and stator 5. Stator 5 is fixed to cage member 12. This is because cage member 12 is stator 5A that is a part of stator 5, and bobbin 23 and coil 24 constituting stator 5 are fixed to cage member 12. On the other hand, magnetic ring 7 faces stator 5 and is fixed to the side of inner ring 4 serving as a rotation ring. In other words, magnetic ring 7 is not fixed to cage member 12. Therefore, only members of generator G excluding magnetic ring 7 are fixed to cage member 12.

At least one sensor SSR (see Fig. 16) in bearing device 1B of the present embodiment includes at least one included in a group consisting of acceleration sensor 15, temperature sensor 16, and AE sensor 36. Thus, bearing device 1B can detect at least one of the acceleration, the temperature, and the vibration (an AE wave) of the rotation of bearing 2.

### (Seventh Embodiment)

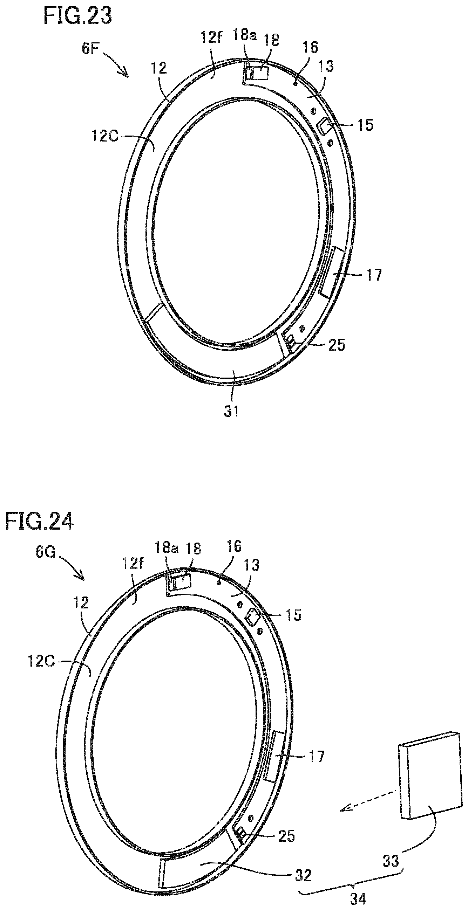

Fig. 23 is a perspective view of a sensor unit 6F according to the seventh embodiment. Referring to Fig. 23, in the seventh embodiment, a storage battery 31 is used as power supply PWR provided in bearing device 1A according to the fifth embodiment. Storage battery 31 is fixed to front surface 12f of side plate portion 12C of cage member 12. In other words, storage battery 31 preferably has, for example, an arc-shaped planar shape so as to coincide with the shape of front surface 12f. Storage battery 31 may be configured such that a plurality of power storage elements are mounted on a substrate. Storage battery 31 corresponds to electromagnetic induction-type generator G in the sixth embodiment. However, generator G generates AC power, whereas storage battery 31 generates DC power. Thus, power supply circuit 17 in the present embodiment does not have a function of rectifying AC power to DC power as in the sixth embodiment. Power supply circuit 17 in the present embodiment controls the voltage value to reach a target value by stepping up and stepping down of the voltage.

### (Eighth Embodiment)

Fig. 24 is a perspective view of a sensor unit 6G according to the eighth embodiment. Referring to Fig. 24, in the eighth embodiment, as power supply PWR provided in bearing device 1A according to the fifth embodiment, a power feeding device 34 is used that includes: a power reception circuit 32 and a power transmission circuit 33 that contactlessly transmits a signal to power reception circuit 32. Power reception circuit 32 is fixed to front surface 12f of side plate portion 12C of cage member 12. In other words, (the substrate of) power reception circuit 32 preferably has, for example, an arc-shaped planar shape so as to coincide with the shape of front surface 12f. Power feeding device 34 corresponds to storage battery 31 in the seventh embodiment, and has the same function as that of storage battery 31.

The features described in each of the embodiments (and examples included in the embodiments) described above may be applied in an appropriate combination within the range where no technical inconsistency occurs.

### (Summary)

A bearing device according to the present disclosure includes: a bearing including an outer ring, an inner ring, a rolling element, and a cage that holds a plurality of the rolling elements at intervals in a circumferential direction; and a cage member. The cage is shaped to be open on one end face side and to be connected on the other end face side in an axial direction, the cage member is disposed at a position on the one end face side across the rolling element from the cage, the cage member is fixed to one of the outer ring and the inner ring, the cage member is made of metal, the cage member includes a side plate portion having a width in a radial direction and extending in the circumferential direction, at least a part of a power supply configured to generate electric power and a circuit board are fixed to the cage member, and the circuit board is fixed to a surface of the side plate portion on a side not facing the rolling element in the axial direction.

Preferably, at least one sensor that detects the state of the bearing and a wireless communication circuit that wirelessly transmits an output from the sensor to the outside are mounted on the circuit board.

Preferably, the at least one sensor includes at least one included in a group consisting of an acceleration sensor, a temperature sensor, and an AE sensor.

Preferably, the power supply is an electromagnetic induction-type generator including: a magnetic ring fixed to the other one different from one of the outer ring and the inner ring; and a coil attached to the cage member so as to face the magnetic ring in a radial direction of the bearing.

Preferably, the power supply is a storage battery.

Preferably, the power supply is a power feeding device including: a power reception circuit; and a power transmission circuit that contactlessly transmits a signal to the power reception circuit. The power reception circuit is mounted on the cage member.

Preferably, the cage member, the circuit board, and the power supply are disposed so as not to protrude outward in the axial direction from an end face of the outer ring.

It should be understood that the embodiments disclosed herein are illustrative and non-restrictive in every respect. The scope of the present disclosure is defined by the scope of the claims, rather than the above description of the embodiments, and is intended to include any modifications disclosed in the appended claims.

### REFERENCE SIGNS LIST

1, 1A, 1B bearing device, 2 bearing, standard bearing, 3 outer ring, 3a first cutout portion, 4 inner ring, 4a second cutout portion, 5, 5A, 5B, 5C stator, 6, 6A, 6B, 6C, 6D, 6E, 6F, 6G sensor unit, 7 magnetic ring, 7a core metal, 7b multipole magnet, 8 rolling element, 9 cage, 10 seal, 12, 12A, 12B cage member, 12Aa, 27b, 28b, 29-1a inner circumferential portion, 12Ab, 27a, 28a, 29-1b outer circumferential portion, 12Ad, 27c, 28c, 29-1d bottom portion, 12a partition wall, 12b first region, 12c second region, 13 circuit board, 14 lid, 15 acceleration sensor, 16 temperature sensor, 17 power supply circuit, 18 wireless communication circuit, 18a antenna portion, 21, 22, 26, 27, 28, 29 magnetic member, 21a, 22a, 26a, 26b, 27d, 28d, 29a, 29b a plurality of claw portions, 23 bobbin, 24 coil, 26c, 27e, 29d recess, 26d, 28e, 29c protrusion, 29e hole portion, 30 resin member, 50 annular recess, G generator, O rotation axis.

## Claims

1. A bearing device (1) comprising:
a bearing (2) including an outer ring (3), an inner ring (4), and a rolling element (8);
a magnetic ring (7) fixed to one of the outer ring (3) or the inner ring (4);
a stator (5) disposed to face the magnetic ring (7) in a radial direction of the bearing (2) and fixed to the other of the outer ring (3) or the inner ring (4); and
a circuit board (13), wherein
the magnetic ring (7) and the stator (5) constitute a generator (G) that generates AC power,
the circuit board (13) includes
at least one sensor (15,16) that detects a state of the bearing (2),
a wireless communication circuit (18) that wirelessly transmits an output from the at least one sensor to outside, and
a power supply circuit (17) that converts AC power generated by the generator (G) into DC power usable in the at least one sensor and the wireless communication circuit (18), and
the magnetic ring (7), the stator (5), and the circuit board (13) are disposed in an annular space so as not to overlap with each other in an axial direction of the bearing (2), the annular space being formed by an end portion of the outer ring (3) and an end portion of the inner ring (4).

2. The bearing device (1) according to claim 1, wherein
the circuit board (13) has an arc shape, and
the at least one sensor, the wireless communication circuit (18), and the power supply circuit (17) are disposed on a circumference of the circuit board (13) so as not to overlap with each other in an axial direction.

3. The bearing device (1) according to claim 1 or 2, wherein
the bearing is a standard bearing (2) that has main dimensions defined under specific standards.

4. The bearing device (1) according to claim 3, wherein the specific standards are ISO standards or JIS standards.

5. The bearing device (1) according to claim 4, wherein
the standard bearing (2) is a radial bearing, and
main dimensions of the radial bearing are dimensions defined in ISO 15 or JIS B 1512-1.

## Patentansprüche

1. Lagervorrichtung (1), umfassend:
ein Lager (2) mit einem Außenring (3), einem Innenring (4) und einem Wälzkörper (8);
einen Magnetring (7), der an einem der Elemente Außenring (3) oder Innenring (4) befestigt ist;
einen Stator (5), der so angeordnet ist, dass er dem Magnetring (7) in radialer Richtung des Lagers (2) gegenüberliegt, und der an dem anderen Element, dem Außenring (3) oder dem Innenring (4), befestigt ist; und
eine Leiterplatte (13), wobei
der Magnetring (7) und der Stator (5) einen Generator (G) bilden, der Wechselstrom erzeugt,
die Leiterplatte (13) umfasst
mindestens einen Sensor (15, 16), der einen Zustand des Lagers (2) erfasst,
eine drahtlose Kommunikationsschaltung (18), die ein Ausgangssignal des mindestens einen Sensors drahtlos nach außen überträgt, und
eine Stromversorgungsschaltung (17) umfasst, die den vom Generator (G) erzeugten Wechselstrom in Gleichstrom umwandelt, der in dem mindestens einen Sensor und der drahtlosen Kommunikationsschaltung (18) verwendet werden kann, und
der Magnetring (7), der Stator (5) und die Leiterplatte (13) sind in einem ringförmigen Raum angeordnet, so dass sie sich in axialer Richtung des Lagers (2) nicht überlappen, wobei der ringförmige Raum durch einen Endabschnitt des Außenrings (3) und einen Endabschnitt des Innenrings (4) gebildet wird.

2. Lagervorrichtung (1) gemäß Anspruch 1, wobei
die Leiterplatte (13) eine Bogenform aufweist und
der mindestens eine Sensor, die drahtlose Kommunikationsschaltung (18) und die Stromversorgungsschaltung (17) auf einem Umfang der Leiterplatte (13) so angeordnet sind, dass sie sich in axialer Richtung nicht überlappen.

3. Lagervorrichtung (1) gemäß Anspruch 1 oder 2, wobei
das Lager ein Standardlager (2) ist, dessen Hauptabmessungen durch bestimmte Normen definiert sind.

4. Lagervorrichtung (1) gemäß Anspruch 3, wobei die spezifischen Normen ISO-Normen oder JIS-Normen sind.

5. Lagervorrichtung (1) gemäß Anspruch 4, wobei
das Standardlager (2) ein Radiallager ist und
die Hauptabmessungen des Radiallagers Abmessungen sind, die in ISO 15 oder JIS B 1512-1 definiert sind.

## Revendications

1. Dispositif de type palier (1) comprenant :
un palier (2) incluant une bague extérieure (3), une bague intérieure (4), et un élément de roulement (8) ;
une bague magnétique (7) fixée sur l'une de la bague extérieure (3) ou de la bague intérieure (4) ;
un stator (5) disposé de façon à être tourné vers la bague magnétique (7) dans une direction radiale du palier (2) et fixé sur l'autre de la bague extérieure (3) ou de la bague intérieure (4) ; et
une carte à circuit (13), dans lequel
la bague magnétique (7) et le stator (5) constituent un générateur (G) qui génère une puissance en courant alternatif (CA),
la carte à circuit (13) inclut
au moins un capteur (15, 16) qui détecte un état du palier (2),
un circuit de communication sans fil (18) qui transmet de manière non filaire une sortie provenant dudit au moins un capteur vers l'extérieur, et
un circuit d'alimentation de puissance (17) qui convertit une puissance CA générée par le générateur (G) en une puissance en courant continu (CC) pouvant être utilisée dans ledit au moins un capteur et le circuit de communication sans fil (18), et
la bague magnétique (7), le stator (5), et la carte à circuit (13) sont disposés dans un espace annulaire de façon à ne pas se chevaucher les uns avec les autres dans une direction axiale du palier (2), l'espace annulaire étant formé par une portion d'extrémité de la bague extérieure (3) et une portion d'extrémité de la bague intérieure (4).

2. Dispositif de type palier (1) selon la revendication 1, dans lequel
la carte à circuit (13) a une forme d'arc, et
ledit au moins un capteur, le circuit de communication sans fil (18), et le circuit d'alimentation de puissance (17) sont disposés sur une circonférence de la carte à circuit (13) de manière à ne pas se chevaucher les uns avec les autres dans une direction axiale.

3. Dispositif de type palier (1) selon la revendication 1 ou 2, dans lequel
le palier est un palier standard (2) qui a des dimensions principales définies selon des normes spécifiques.

4. Dispositif de type palier (1) selon la revendication 3, dans lequel
les normes spécifiques sont des normes ISO ou des normes JIS.

5. Dispositif de type palier (1) selon la revendication 4, dans lequel
le palier standard (2) est un palier radial, et
des dimensions principales du palier radial sont des dimensions définies dans ISO 15 ou JIS B 1512-1.
